# EUROPEAN PATENT SPECIFICATION

(11) **EP 2 456 223 B1**
(45) Date of publication and mention of the grant of the patent: **10.08.2016**
(21) Application number: 12154284.9
(22) Date of filing: 28.06.2005
(51) Int. Cl.: H04N 21/2362, H04N 21/2389, H04N 21/433

(54) **SYSTEM FOR PROVIDING ACCESS TO INFORMATION NEEDED FOR PERFORMING TRICK MODE OPERATIONS ON A VIDEO ELEMENTARY STREAM**
SYSTEM ZUR BEREITSTELLUNG VON INFORMATIONEN ZUR DURCHFÜHRUNG VON TRICK-MODUS-OPERATIONEN AUF EINEM ELEMENTAREN VIDEODATENSTROM
SYSTEME DONNANT ACCES A DES INFORMATIONS NÉCESSAIRES POUR EFFECTUER DES OPERATIONS DE TYPE TRICK-MODE SUR UN FLUX VIDEO ELEMENTAIRE

(30) Priority: 16.08.2004 US 601890 P; 16.08.2004 GB 0418279
(43) Date of publication of application: 23.05.2012
(62) Divisional of application: 05754983.4
(73) Proprietor: NDS Limited, Staines, Middlesex TW18 4EX (GB)
(72) Inventor: Murray, Kevin, Fordingbridge, Hampshire SP6 1DB (GB); Darshan, Ezra, Nofei Aviv (IL); Fink, David, 90435 Efrat (IL)
(74) Representative: Watterson, Peer Marten John

(56) References cited:
- EP-A- 0 674 440
- EP-A- 1 122 728
- "Information technology - Generic coding of moving pictures and associated audio information: Systems; H.222.0 (07/95)", ITU-T STANDARD SUPERSEDED (S), INTERNATIONAL TELECOMMUNICATION UNION, GENEVA, CH, no. H.222.0 (07/95), 10 July 1995 (1995-07-10), XP017401293,
- CURET D ET AL: "FlexMux & RTP & RTCP", JOINT VIDEO TEAM (JVT) OF ISO/IEC MPEG & ITU-T VCEG(ISO/IEC JTC1/SC29/WG11 AND ITU-T SG16 Q6), XX, XX, no. M5210, 28 September 1999 (1999-09-28), XP030034412,
- HOFFMAN G FERNANDO SUN MICROSYSTEMS D ET AL: "RTP Payload Format for MPEG1/MPEG2 Video; rfc2250.txt", IETF STANDARD, INTERNET ENGINEERING TASK FORCE, IETF, CH, 1 January 1998 (1998-01-01), XP015008034, ISSN: 0000-0003

## Description

### FIELD OF THE INTENTION

The present invention relates to apparatus and methods for providing access to content in a data stream.

### BACKGROUND OF THE INVENTION

One key aspect of the efficient operation of PVRs (Personal Video Recorders) that record a digital television signal is the ability to quickly, easily, and reliably identify places within a recorded video stream that correspond to starts and ends of pictures, locations of certain picture types, and a time associated with a picture. All of the places within the recorded video stream that correspond to the starts and ends of pictures; locations of certain picture types; and time associated with the picture are typically carried as part of the digital video signal. However, the digital television signal is often encrypted (also termed "scrambled" in the art and throughout the present specification and claims) in order to ensure correct payment for access to the television signal. It is often desirable not to decrypt the television signal when the television signal is recorded; accessing the places within the recorded video stream that correspond to the starts and ends of pictures; locations of certain picture types; and time associated with the picture is therefore difficult. Even if the signal is decrypted upon recording, or is transmitted unencrypted, locating desired information can require searching through large amounts of the digital television signal, which can be a costly operation.

It is appreciated that while the following discussion concentrates on video based systems, the present invention can also be applied to other coding technologies such as audio or data coding systems. The use of the word "video" should not be taken as limiting the scope of the invention.

Newer video coding technologies, such as AVC (ISO/IEC 14496-10) make it even more important that the information is correctly signalled, since existing heuristic mechanisms for "guessing" the location, value and type of information are becoming ever more unreliable due to the changes in video coding technologies.

Digital video standards that are relevant to understanding the state of the art include the following published standards:
ISO/IEC 13818-1:2000, *MPEG-2 Systems Specification*;
ISO/IEC 13818-2:2000, *MPEG-2 Video Specification,* particularly Sections 6.3.3 and 6.3.8;
ISO/IEC 13818-1:2000/Amd.3:(2003), *Transport of AVC video data in MPEG*-*2 TS*;
ISO/IEC 14496-10:2003 *MPEG-4 AVC Video Specification,* particularly Sections 7.3.1, 7.4.1, Annex A, D.8.7, and D.9.7; and
Annex E of ETSI TS 101 154 V1.5.1 (2004-05), *Digital Video Broadcasting (DVB); Implementation guidelines for the use of Video and Audio Coding in Broadcasting Application based on the MPEG*-*2 Transport Stream.*

Internet Engineering Task Force (IETF) Requests for Comment (RFCs) that are relevant to understanding the state of the art include the following published RFCs:
RFC 1889, *RTP: A Transport Protocol for Real-Time Applications;* and
RFC 1890, *RTP Profile for Audio and Video Conferences with Minimal Control.*

The following patent applications are believed to represent the state of the art:
PCT Patent Application PCT/IL00/00276 (published as WO 01/35669) of NDS Limited, and corresponding US Patent Application S/N 09/574,096 of Darshan et al; and
PCT Patent Application PCT/IL02/00534 (published as WO 03/010970) of NDS Limited, and corresponding US Patent Application S/N 10/479,373 of Darshan et al.

EP1122728 discloses recording in an additional map file the encrypted data and an additional map file the information needed for performing trick mode operations on an encrypted video stream.

### SUMMARY OF THE INVENTION

The present invention, in preferred embodiments thereof, comprises apparatus and methods, typically implemented at a broadcast headend or other facility for data stream preparation, operative to extract information useful for efficient operation of devices such as PVRs from a digital signal prior to potential encryption thereof, The extracted information is then potentially placed in an unencrypted section of the data transmitted in a way that enables the receiving PVR (or other device) to easily locate and use the extracted information to identify locations of interest and the types of those locations.

There is thus provided in accordance with a preferred embodiment of the present invention providing a digital signal encoded, in accordance with a layered encoding scheme, in a plurality of layers, and extracting operation information from a first layer of encoding within the digital signal, and placing the extracted information in a data section in a second layer of encoding within the digital signal.

Further in accordance with a preferred embodiment of the present invention the digital signal includes a transport layer.

Still further in accordance with a preferred embodiment of the present invention the operation information is extracted from the transport layer.

Additionally in accordance with a preferred embodiment of the present invention the data section is not subject to encryption.

Moreover in accordance with a preferred embodiment of the present invention the data section is subject to encryption.

Further in accordance with a preferred embodiment of the present invention the data section is encrypted in accordance with an encryption scheme different from an encryption scheme used to encrypt the first layer.

Still further in accordance with a preferred embodiment of the present invention the operation information includes at least one of a location and type of access unit, timing information, and rendering information.

Additionally in accordance with a preferred embodiment of the present invention the layered encoding scheme includes an MPEG- stream.

Moreover in accordance with a preferred embodiment of the present invention the layered encoding scheme includes an MPEG- stream.

Further in accordance with a preferred embodiment of the present invention the layered encoding scheme includes an I-frame.

Still further in accordance with a preferred embodiment of the present invention the layered encoding scheme includes a P-frame,

Additionally in accordance with a preferred embodiment of the present invention the layered encoding scheme includes a B-frame.

Moreover in accordance with a preferred embodiment of the present invention the data section is optimized for implementation in hardware.

Further in accordance with a preferred embodiment of the present invention the extracted information is placed in the second layer when the extracted information changes relative to an earlier version of the extracted information.

Still further in accordance with a preferred embodiment of the present invention the extracted information is placed in the second layer when the layered encoding scheme changes from a default pattern.

Additionally in accordance with a preferred embodiment of the present invention, the method includes transmitting the digital signal and the data section to a receiving device.

Moreover in accordance with a preferred embodiment of the present invention the receiving device includes a personal video recorder (PVR).

Further in accordance with a preferred embodiment of the present invention, the method includes utilizing the operation information at the receiving device.

Still further in accordance with a preferred embodiment of the present invention the utilizing includes at least one of the following identifying at least one location of interest, identifying a type of at least one location of interest, and performing a trick mode operation.

Additionally in accordance with a preferred embodiment of the present invention the trick mode operation includes at least one of the following fast forward, slow motion forward, fast reverse, slow motion reverse, freeze frame, and random access.

There is also provided in accordance with another preferred embodiment of the present invention utilizing operation information from a data section of the digital signal, the data section having been produced by extracting operation information from the digital signal, and placing the operation information in the data section, the data section being not subject to encryption, and placing the operation information in a retrieval area.

Further in accordance with a preferred embodiment of the present invention the utilizing includes ensuring that correct video data is played back.

Still further in accordance with a preferred embodiment of the present invention the retrieval area includes an index table.

Additionally in accordance with a preferred embodiment of the present invention the extracting occurs when the digital signal is played back.

Moreover in accordance with a preferred embodiment of the present invention the extracting occurs when the digital signal is recorded.

Further in accordance with a preferred embodiment of the present invention the operation information includes at least one of a location and type of access unit, timing information, and rendering information.

Still further in accordance with a preferred embodiment of the present invention the data section is optimized for implementation in hardware.

There is also provided in accordance with a still another preferred embodiment of the present invention a method for providing access to operation information relating to a portion of a digital signal, the method including receiving a digital signal, the digital signal including a data section and at least one other section, the data section including operation information, utilizing the operation information, and placing the operation information in a retrieval area, wherein the one other section is encrypted, and the data section is not encrypted, and the one other section includes a copy of the operation information.

Further in accordance with a preferred embodiment of the present invention the utilizing includes ensuring that correct video data is played back.

Still further in accordance with a preferred embodiment of the present invention the retrieval area includes an index.

Additionally in accordance with a preferred embodiment of the present invention the extracting occurs when the digital signal is played back.

Moreover in accordance with a preferred embodiment of the present invention the extracting occurs when the digital signal is recorded.

Further in accordance with a preferred embodiment of the present invention the operation information includes at least a location and type of access unit, timing information, and rendering information.

Still further in accordance with a preferred embodiment of the present invention the data section is optimized for implementation in hardware.

There is also provided in accordance with a still another preferred embodiment of the present invention a digital signal provider providing an encoded digital signal, in accordance with a layered encoding scheme, in a plurality of layers, and an operation information extractor extracting operation information from a first layer of encoding within the digital signal, and placing the extracted information in a data section in a second layer of encoding within the digital signal.

There is also provided in accordance with a still another preferred embodiment of the present invention an operation information utilizer, utilizing operation information from a data section of the digital signal, the data section have been produced by an operation information extractor which extracts the operation information from the digital signal, and an operation information placer which places the operation information in the data section, the data section being not subject to encryption, and an operation information placer operative to place the operation information in a retrieval area.

There is also provided in accordance with a still another preferred embodiment of the present invention a digital signal receiver operative to receive the digital signal, the digital signal including a data section and at least one other section, the data section including operation information, an operation information utilizer, and an operation information placer, operative to place the operation information in a retrieval area, wherein the one other section is encrypted, and the data section is not encrypted, and the one other section includes a copy of the operation information.

### BRIEF DESCRIPTION OF THE DRAWINGS

The present invention will be understood and appreciated more fully from the following detailed description, taken in conjunction with the drawing in which:
Fig. 1 is a simplified partly pictorial, partly block diagram illustration of a system for improving efficiency of location identification in a data stream, the system being constructed and operative in accordance with a preferred embodiment of the present invention; and
Fig. 2 and Fig. 3 are simplified flowchart illustrations of preferred methods of operation of the system of Fig. 1.

### DETAILED DESCRIPTION OF A PREFERRED EMBODIMENT

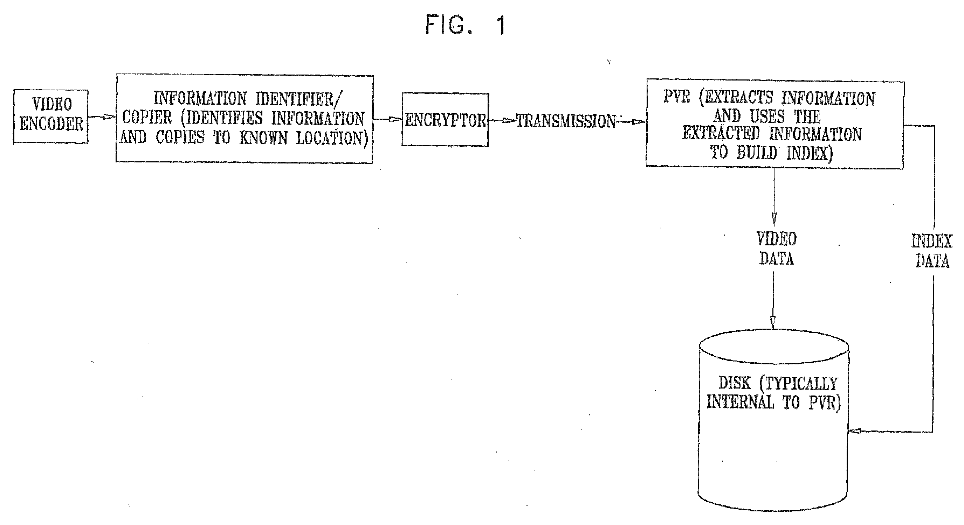

Reference is now made to Fig. 1, which is a simplified partly pictorial, partly block diagram illustration of a system for improving efficiency of location identification in a data stream, the system being constructed and operative in accordance with a preferred embodiment of the present invention. The system of Fig. 1 is self-explanatory with reference to the discussion above and below.

Those skilled in the art will appreciate that the data stream preferably includes a transport layer. The transport layer preferably includes operation information. The operation information is preferably extracted from the transport layer. The extracted operation information is preferably placed in a data section. In some preferred embodiments of the present invention, the data section is preferably not subject to encryption. Alternatively, the data section preferably is subject to encryption. In some preferred embodiments of the present invention, the data section may preferably be encrypted using a different encryption scheme than the encryption scheme used to encrypt a video stream included in the digital signal.

The data section is preferably optimized for implementation in hardware, thereby making the data section easy to locate by a receiving device. For example, and without limiting the generality of the foregoing, in an MPEG-2 transport stream, a flag in a well known, fixed location would indicate the data section's presence. Typical examples of flags in a well known, fixed location which indicate the data section's presence include an adaptation field control flag and a transport private data flag in the adaptation field.

The operation information preferably includes at least one of:
a location and type of access unit;
timing information; and
rendering information.

It is appreciated that the digital signal may preferably transmitted to the receiving device, and may preferably be encoded using any appropriate layered encoding scheme, including, but not limited to, MPEG-2 and MPEG 4. It is further appreciated that the layered encoding scheme preferably includes at least one I-frame.

In some preferred embodiments of the present invention, extracted information may preferably be placed in the data section when a condition is met. For example, and without limiting the generality of the foregoing, information may be placed in the data section when the extracted information is changed. For example, and without limiting the generality of the foregoing, if the data stream includes a signal that video is encoded as either a field or as a frame, information signaling the change of encoding may be placed in the data section when there is a transition in video encoding from field to frame or vice-versa.

Similarly, information may be placed in the data section when encoding is changed from a given default encoding pattern. For example, and without limiting the generality of the foregoing, in many MPEG encoding schemes, frames are typically encoded in an IBBP pattern (an I-frame followed by two B-frames followed by a P-frame). If the encoding pattern changes to IBP, information signalling the change of encoding pattern may be placed in the data section.

It is appreciated that the digital signal may preferably be an encrypted digital signal. Alternatively, the digital signal preferably may not be encrypted.

Those skilled in the art will appreciate that the receiving device may preferably include a set-top box or personal video recorder (PVR). The receiving device preferably utilizes the operation information, wherein the utilizing includes at least one of:
identifying at least one location of interest;
identifying a type of at least one location of interest; and
performing a trick mode operation.

The utilizing and trick modes are described in greater detail below.

It is appreciated that, using the techniques described above, the present invention, in preferred embodiments thereof, enables the receiving device to utilize information without accessing the layer in which the information originally resided.

A preferred embodiment of the present invention suitable for use with MPEG-2 Systems (such as systems conforming to the ISO/IEC 13818-1:2000 specification, preferred to above and incorporated herein by reference) is now described in more detail. It is appreciated that the MPEG-2 system is provided as a particular non-limiting example of an implementation of the present invention, and that the present invention may also be implemented in conjunction with other systems including, by way of further non-limiting example, IP based systems, such as RTP or DIRECTV Transport Protocol. In various parts of the description of the preferred embodiment of the present invention suitable for use with MPEG-2 Systems, details will be given which may be relevant for MPEG-4 Systems (ISO/IEC 14496-10:2003), and other systems as well.

In the case of MPEG-2 Systems (13818-1:2000), extracting information in accordance with the present invention is preferably achieved by placing a data structure in the user-private section of the adaptation layer data of the transport packet; persons skilled in the art will appreciate that the adaptation layer data is not encrypted. The presence of the adaptation layer data is signalled by a flag in the transport packet header (the adaptation field control flags), and the adaptation layer data itself (if more than one byte long) includes a flag (private data field flag) which signals the presence of private data. Thus it is a simple operation to identify the location of the desired information.

The exact format and frequency of the extracted information to be inserted can vary depending on the application, and the details of the video encoding algorithm(s) that are supported. As a non-limiting example, the table below shows one potential definition for the adaptation layer data, shown as a modification to the adaptation_field() structure defined in ISO/IEC 13818-1:2000 (see particularly section 2.4.3.5 and table 2-6).

In the table below:
MPEG_standard_field(s)/data refers to MPEG standard fields not discussed in detail in the table, in order to simplify the table;
transport_private_data_length refers to an MPEG-defined field including the length of the private data;
syntax_version indicates a version of the private data syntax. Preferably set to 0xB0. It is appreciated that Appendix E of ETSI TS 101 154 V1.5.1 (2004-05) describes a descriptor-like structure within a transport_private_data field of the adaptation field. Thus, the syntax_version value of 0xB0 has been chosen not to conflict with the tag values in ETSI TS 101 154 V1.5.1;
stream-type = 1 refers to ISO/TEC 13818-2, and stream_type = 2 refers to ISO/IEC 14496-10, it being appreciated that these are provided as non-limiting examples only;
time_code_present, when set to 1, indicates that a time code of the immediately following picture is present in the private data;
PTS_32 refers to the 32 most significant bits of a 33-bit PTS (presentation time stamp, see ISO/IEC 13818-1 Section 2.1.39 and 2.4.3.7) encoded in a PES header immediately following the present adaptation field;
time_code () refers to an SMPTE time code value encoded in 24 bits. The format of the time_code () is almost identical to a 25-bit format specified for a MPEG-2 GOP header (ISO/IEC 13818-2 Section 6.3.8). However, the marker_bit field specified for the MPEG-2 GOP header is not used in the time_code() field;
picture_type refers to a type of an immediately following picture, where a value of 1 indicates an I-picture, a value of 2 indicates a P-picture and a value of 4 indicates a B-picture;
frame_rate_code refers to the frame rate of a stream carried on the present PID, encoded as in 6.3.3 of ISO/IEC 13818-2:2000;
profile_and_level_indication refers to a profile and level that is equal to or higher than any profile and level in any sequence in an associated video stream, encoded as in 6.3.3 of ISO/IEC 13818-2:2000;
profile_idc together with the level_idc field, indicates constraints in encoding of an AVC video stream, encoded as in ISO/IEC 14496-10:2003, Annex A;
level_idc together with the profile_idc field, indicates the constraints in encoding of the AVC video stream, encoded as in ISO/IEC 14496-10:2003, Annex A;
nal_ref_idc indicates whether the present frame is used for inter prediction of any other pictures, encoded as in ISO/IEC 14496-10:2003, sections 7.3.1 and 7.4.1; and
entry_point_frame_count indicates how many subsequent frames must be decoded from the present point it is possible to reliably decode all subsequent frames. A value of 0 signifies that it is either unknown how many subsequent frames must be decoded from the present point or the number for frames which must be decoded from the present point is greater than a allowable maximum value. Frames for which the random_access_indicator is set will also have entry_point_frame_count equal to zero, since video can be reliably decoded from such frames.

It is appreciated that entry_point_frame_count is similar in concept to the recovery_point structure defined in ISO/IEC 14496-10:2003, sections D.8.7 and D.9.7.

**Table 1: Syntax for Adaptation Field**

| Syntax | No. of Bits | Mnemonic |
|---|---|---|
| adaptation_field () { | | |
| adaptation_field_length | 8 | uimsbf |
| MPEG standard fields | 6 | bslbf |
| transport_private_data_flag | 1 | '1' |
| MPEG standard field | 1 | |
| MPEG standard data | variable | |
| if (transport_private_data_flag == '1') { | | |
| transport_private_data_length | 8 | uimsbf |
| syntax_version | 8 | uimsbf |
| stream_type | 4 | uimsbf |
| reserved | 3 | '111' |
| time_code_present | 1 | |
| PTS_32 | 32 | uimsbf |
| if (time_code_present == '1') { | | |
| time_code () | 24 | |
| } | | |
| if (stream_type == '1' or '2') | | |
| picture_type | 4 | uismbf |
| frame_rate_code | 4 | uismbf |
| } | | |
| if (stream_type == '1'){ | | |
| profile_and_level_indication | 8 | uismbf |
| } | | |
| else if (stream_type == '2') { | | |
| proflte_idc | 8 | uismbf |
| level_idc | 8 | uismbf |
| nal_ref_idc | 2 | uismbf |
| entry_point_frame_count | 6 | uismbf |
| } | | |
| } | | |
| } | | |

The mnemonic "uimsbf" stands for: unsigned integer, most significant bit first, and the mnemonic "bslbf" stands for: bit string, left bit first (see ISO/IEC 13818-1, Section 2.2.6).

When a signal is recorded, the information described in Table 1 can be extracted and held in a separate index table to simplify access. Alternatively, the information can be extracted when the video is played back.

When the recorded video is played back, the extracted information, as described in the table above, is preferably used to ensure that the correct video data is played back. The indicated mechanism also supports such operations as "trick modes", which are currently difficult to implement with the newer coding technologies such as AVC (14496-10) without the presence of assistance information as is provided in preferred embodiments of the present invention. For example, and without limiting the generality of the foregoing, the systems described in US Patent Application S/N 09/574,096 of Darshan et al and US Patent Application S/N 10/479,373 of Darshan et al, referred to above and incorporated herein by reference, may be used to support trick mode operations.

The term "trick modes", in all its grammatical forms, as used throughout the present specification and claims includes, but is not limited to, one or more of the following: fast forward; slow motion forward; fast reverse; slow motion reverse; freeze frame; and random access. The term "random access" is used throughout the present specification and claims to refer both to random access to any particular point and to access to a specific predefined location or event, such as a next location or event, in a data stream.

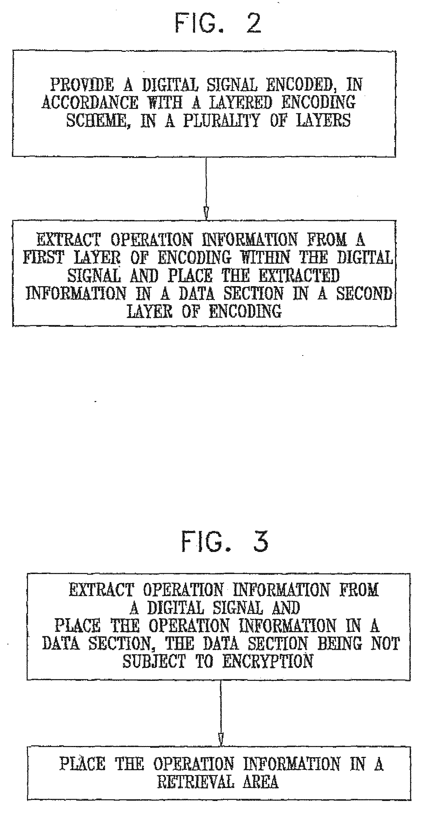

Reference is now made to Fig. 2 and Fig. 3, which are simplified flowchart illustrations of preferred methods of operation of the system of Fig. 1. The methods of Fig. 2 and Fig. 3 are believed to be self-explanatory with reference to the above discussion.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination. For example, each of the following subcombinations may be provided separately: the portion of the system and the associated methods described above as taking place at a broadcast headend or other facility for data stream preparation; and the portion of the system and the associated methods described above as taking place at a PVR or similar device.

It will be appreciated by persons skilled in the art that the present invention is not limited by what has been particularly shown and described hereinabove. Rather the scope of the invention is defined only by the claims which follow:

## Claims

1. A method for providing access to operation information relating to an encoded digital television signal, the encoded digital television signal is encoded in accordance with a layered encoding scheme, in a plurality of layers comprising a first layer comprising an elementary video stream and a second layer comprising a transport stream, the elementary video stream is encapsulated in the transport stream the method comprising:
utilizing operation information from a data section of the digital television signal to perform a trick mode operation on the first layer, the operation information comprising at least one of:
a location and type of access unit;
timing information; and
video decoding information,
the data section having been produced by:
extracting operation information from the elementary video stream; and
recording a copy of the operation information in a private data section of an adaptation field in the transport stream, the private data section being not subject to encryption; and
placing the copy of the operation information in a retrieval area,
wherein the operation information is suitable for performing a trick mode operation on the first layer.

2. The method according to claim 1 and wherein the utilizing comprises ensuring that video data indicated by the extracted operation information is played back.

3. The method according to either claim 1 or claim 2 and wherein the retrieval area comprises an index table.

4. The method according to either claim 1 or claim 2 and wherein the extracting occurs when the digital signal is played back.

5. The method according to either claim 1 or claim 2 and wherein the extracting occurs when the digital signal is recorded.

6. The method according to claim 1 and wherein the data section is optimized for implementation in hardware.

7. Apparatus for providing access to operation information relating to a digital television signal, the digital television signal being encoded in accordance with a layered encoding scheme, in a plurality of layers comprising a first layer comprising an elementary video stream and a second layer comprising a transport stream, the elementary video stream is encapsulated in the transport stream the apparatus comprising:
an operation information utilizer utilizing operation information from a data section of the digital television signal to perform a trick mode operation on the first layer, the operation information comprising at least one of:
a location and type of access unit;
timing information; and
video decoding information,
the data section have been produced by:
an operation information extractor which extracts the operation information from the elementary video stream; and
an operation information recorder placer which places the operation information in a private data section of an adaptation field in the transport stream, the private data section being not subject to encryption; and
an operation information placer operative to place the copy of the operation information in a retrieval area,
wherein the operation information is suitable for performing a trick mode operation on the first layer.

8. A method for providing access to operation information relating to a portion of a recorded digital television signal comprising a first layer comprising an elementary video stream and a second layer comprising a transport stream, the elementary video stream being encapsulated in the transport stream, the operation information being extracted from a private data section of an adaptation field of the transport stream, the operation information comprising at least one of:
a location and type of access unit;
timing information; and
video decoding information,
the method comprising:
receiving a digital television signal, the digital signal comprising the private data section and at least one other section, the private data section comprising the operation information;
utilizing the operation information in order to perform a trick mode operation on the first layer; and
placing the operation information in a retrieval area,
wherein:
the one other section is encrypted, and
the data section is not encrypted, and
the one other section comprises a copy of the operation information.

9. The method according to claim 8 and wherein the utilizing comprises ensuring that video data indicated by the extracted operation information is played back.

10. The method according to either claim 8 or claim 9 and wherein the retrieval area comprises an index.

11. The method according to either claim 8 or claim 9 and wherein the extracting occurs when the digital signal is played back.

12. The method according to either claim 8 or claim 9 and wherein the extracting occurs when the digital signal is recorded.

13. The method according to claim 8 and wherein the data section is optimized for implementation in hardware.

14. Apparatus for providing access to operation information relating to a portion of recorded digital television signal comprising a first layer comprising an elementary video stream and a second layer comprising a transport stream, the elementary video stream being encapsulated in the transport stream, the operation information being extracted from a private data section of an adaptation field of the transport stream, the operation information comprising at least one of:
a location and type of access unit;
timing information; and
video decoding information,
the apparatus comprising:
a digital television signal receiver operative to receive the digital signal, the digital signal comprising the private data section and at least one other section, the private data section comprising the operation information;
an operation information utilizer, operative to perform a trick mode operation on the first layer; and
an operation information placer, operative to place the operation information in a retrieval area,
wherein:
the one other section is encrypted, and
the private data section is not encrypted, and
the one other section comprises a copy of the operation information.

## Patentansprüche

1. Verfahren zum Bereitstellen von Zugang zu Betriebsinformation, die sich auf ein codiertes Digitalfernsehsignal bezieht, wobei das codierte Digitalfernsehsignal gemäß einem geschichteten Codierschema codiert ist, in einer Vielzahl von Schichten, die eine erste Schicht, die einen elementaren Videostrom umfasst, und eine zweite Schicht, die einen Transportstrom umfasst, umfassen, wobei der elementare Videostrom im Transportstrom eingekapselt ist, wobei das Verfahren umfasst:
Nutzen von Betriebsinformation aus einem Datenabschnitt des digitalen Fernsehsignals, um eine Trickmodusoperation auf der ersten Schicht durchzuführen, wobei die Betriebsinformation mindestens eines von Folgendem umfasst:
einen Standort und einen Typ einer Zugangseinheit;
Zeitgebungsinformation; und
Videodecodierinformation,
wobei der Datenabschnitt erzeugt worden ist durch:
Extrahieren von Betriebsinformation aus dem elementaren Videostrom; und
Aufzeichnen einer Kopie der Betriebsinformation in einem Privatdatenabschnitt eines Anpassungsfeldes in dem Transportstrom, wobei der Privatdatenabschnitt keiner Verschlüsselung unterliegt; und
Platzieren der Kopie der Betriebsinformation in einem Abrufbereich,
wobei die Betriebsinformation zum Durchführen einer Trickmodusoperation auf der ersten Schicht geeignet ist.

2. Verfahren nach Anspruch 1 und wobei das Nutzen das Sicherstellen umfasst, dass die Videodaten, die durch die extrahierte Betriebsinformation angegeben werden, wiedergegeben werden.

3. Verfahren nach Anspruch 1 oder Anspruch 2 und wobei der Abrufbereich eine Indextabelle umfasst.

4. Verfahren nach Anspruch 1 oder Anspruch 2 und wobei das Extrahieren durchgeführt wird, wenn das digitale Signal wiedergegeben wird.

5. Verfahren nach Anspruch 1 oder Anspruch 2 und wobei das Extrahieren durchgeführt wird, wenn das digitale Signal aufgezeichnet wird.

6. Verfahren nach Anspruch 1 und wobei der Datenabschnitt für eine Implementierung in Hardware optimiert ist.

7. Vorrichtung zum Bereitstellen von Zugang zu Betriebsinformation, die sich auf ein Digitalfernsehsignal bezieht, wobei das Digitalfernsehsignal gemäß einem geschichteten Codierschema codiert ist, in einer Vielzahl von Schichten, die eine erste Schicht, die einen elementaren Videostrom umfasst, und eine zweite Schicht, die einen Transportstrom umfasst, umfassen, wobei der elementare Videostrom im Transportstrom eingekapselt ist, wobei die Vorrichtung umfasst:
einen Betriebsinformationsnutzer, der Betriebsinformation aus einem Datenabschnitt des Digitalfernsehsignals nutzt, um eine Trickmodusoperation auf der ersten Schicht durchzuführen, wobei die Betriebsinformation mindestens eines von Folgendem umfasst:
einen Standort und einen Typ einer Zugangseinheit;
Zeitgebungsinformation; und
Videodecodierinformation,
wobei der Datenabschnitt erzeugt worden ist durch:
einen Betriebsinformationsextrahierer zum Extrahieren der Betriebsinformation aus dem elementaren Videostrom; und
einen Betriebsinformationsaufzeichnerplatzierer zum Platzieren der Betriebsinformation in einem Privatdatenabschnitt eines Anpassungsfeldes im Transportstrom, wobei der Privatdatenabschnitt keiner Verschlüsselung unterliegt; und
einen Betriebsinformationsplatzierer, der betriebsfähig ist, um die Kopie der Betriebsinformation in einem Abrufbereich zu platzieren,
wobei die Betriebsinformation zum Durchführen einer Trickmodusoperation auf der ersten Schicht geeignet ist.

8. Verfahren zum Bereitstellen von Zugang zu Betriebsinformation, die sich auf einen Teil eines aufgezeichneten Digitalfernsehsignals bezieht, das eine erste Schicht, die einen elementaren Videostrom umfasst, und eine zweite Schicht, die einen Transportstrom umfasst, umfasst, wobei der elementare Videostrom im Transportstrom eingekapselt ist, wobei die Betriebsinformation aus einem Privatdatenabschnitt eines Anpassungsfeldes im Transportstrom extrahiert wird, wobei die Betriebsinformation mindestens eines von Folgendem umfasst:
einen Standort und einen Typ einer Zugangseinheit;
Zeitgebungsinformation; und
Videodecodierinformation,
wobei das Verfahren umfasst:
Empfangen eines Digitalfernsehsignals, wobei das Digitalfernsehsignal den Privatdatenbereich und mindestens einen anderen Bereich umfasst, wobei der Privatdatenbereich die Betriebsinformation umfasst;
Nutzen der Betriebsinformation, um eine Trickmodusoperation auf der ersten Schicht durchzuführen; und
Platzieren der Betriebsinformation in einem Abrufbereich,
wobei:
der eine andere Abschnitt verschlüsselt ist und
der Datenabschnitt nicht verschlüsselt ist und
der eine andere Abschnitt eine Kopie der Betriebsinformation umfasst.

9. Verfahren nach Anspruch 8 und wobei das Nutzen das Sicherstellen umfasst, dass die Videodaten, die durch die extrahierte Betriebsinformation angegeben werden, wiedergegeben werden.

10. Verfahren nach Anspruch 8 oder Anspruch 9 und wobei der Abrufbereich einen Index umfasst.

11. Verfahren nach Anspruch 8 oder Anspruch 9 und wobei das Extrahieren stattfindet, wenn das digitale Signal wiedergegeben wird.

12. Verfahren nach Anspruch 8 oder Anspruch und wobei das das Extrahieren stattfindet, wenn das digitale Signal aufgezeichnet wird.

13. Verfahren nach Anspruch 8 und wobei der Datenabschnitt für eine Implementierung in Hardware optimiert ist.

14. Vorrichtung zum Bereitstellen von Zugang zu Betriebsinformation, die sich auf einen Teil eines aufgezeichneten Digitalfernsehsignals bezieht, das eine erste Schicht, die einen elementaren Videostrom umfasst, und eine zweite Schicht, die einen Transportstrom umfasst, umfasst, wobei der elementare Videostrom im Transportstrom eingekapselt ist, wobei die Betriebsinformation aus einem Privatdatenabschnitt eines Anpassungsfeldes im Transportstrom extrahiert wird, wobei die Betriebsinformation mindestens eines von Folgendem umfasst:
einen Standort und einen Typ einer Zugangseinheit;
Zeitgebungsinformation; und
Videodecodierinformation,
wobei die Vorrichtung umfasst:
einen Digitalfernsehsignalempfänger, der betriebsfähig ist, um das digitale Signal zu empfangen, wobei das digitale Signal den Privatdatenabschnitt und mindestens einen anderen Abschnitt umfasst, wobei der Privatdatenabschnitt die Betriebsinformation umfasst;
einen Betriebsinformationsnutzer, der betriebsfähig ist, um eine Trickmodusoperation auf der ersten Schicht durchzuführen; und
einen Betriebsinformationsplatzierer, der betriebsfähig ist, um die Betriebsinformation in einem Abrufbereich zu platzieren,
wobei:
der eine andere Abschnitt verschlüsselt ist, und
der Privatdatenabschnitt nicht verschlüsselt ist, und
der eine andere Abschnitt eine Kopie der Betriebsinformation umfasst.

## Revendications

1. Procédé destiné à fournir un accès à des informations d'exploitation relatives à un signal de télévision numérique codé, le signal de télévision numérique codé étant codé selon un schéma de codage en couches, dans une pluralité de couches comprenant une première couche comportant un flux vidéo élémentaire et une seconde couche comportant un flux de transport, le flux vidéo élémentaire étant encapsulé dans le flux de transport, le procédé comprenant :
l'utilisation d'informations d'exploitation provenant d'une section du signal de télévision numérique pour mettre en oeuvre un fonctionnement en mode truquage sur la première couche, les informations d'exploitation comprenant au moins l'un parmi les éléments ci-après :
un emplacement et un type d'unité d'accès ;
des informations de temporisation ; et
des informations de décodage vidéo,
la section de données ayant été produite par :
l'extraction d'informations d'exploitation à partir du flux vidéo élémentaire ; et
l'enregistrement d'une copie des informations d'exploitation dans une section de données privées d'un champ d'adaptation dans le flux de transport, la section de données privées n'étant pas soumise à un chiffrement ; et
le placement d'une copie des informations d'exploitation dans une zone d'extraction,
dans lequel les informations d'exploitation sont appropriées pour mettre en oeuvre un fonctionnement en mode truquage sur la première couche.

2. Procédé selon la revendication 1 et dans lequel l'utilisation comprend l'étape de faire en sorte que les données vidéo indiquées par les informations d'exploitation extraites soient lues.

3. Procédé selon la revendication 1 ou la revendication 2 et dans lequel la zone d'extraction comprend une table d'index.

4. Procédé selon la revendication 1 ou la revendication 2 et dans lequel l'extraction se fait lors de la lecture du signal numérique.

5. Procédé selon la revendication 1 ou la revendication 2 et dans lequel l'extraction se fait lors de l'enregistrement du signal numérique.

6. Procédé selon la revendication 1 et dans lequel la section de données est optimisée pour une mise en oeuvre dans un matériel.

7. Appareil destiné à fournir un accès à des informations d'exploitation relatives à un signal de télévision numérique, le signal de télévision numérique étant codé selon un schéma de codage en couches, dans une pluralité de couches comprenant une première couche comportant un flux vidéo élémentaire et une seconde couche comportant un flux de transport, le flux vidéo élémentaire étant encapsulé dans le flux de transport, l'appareil comprenant :
un module d'utilisation d'informations d'exploitation utilisant des informations d'exploitation provenant d'une section du signal de télévision numérique pour mettre en oeuvre un fonctionnement en mode truquage sur la première couche, les informations d'exploitation comprenant au moins l'un parmi les éléments ci-après :
un emplacement et un type d'unité d'accès ;
des informations de temporisation ; et
des informations de décodage vidéo,
la section de données ayant été produite par :
un module d'extraction d'informations d'exploitation qui extrait les informations d'exploitation du flux vidéo élémentaire ; et
un module de placement de module d'enregistrement d'informations d'exploitation qui place les informations d'exploitation dans une section de données privées d'un champ d'adaptation dans le flux de transport, la section de données privées n'étant pas soumise à un chiffrement ; et
un module de placement d'informations d'exploitation exploitable de manière à placer la copie des informations d'exploitation dans une zone d'extraction,
dans lequel les informations d'exploitation sont appropriées pour mettre en oeuvre un fonctionnement en mode truquage sur la première couche.

8. Procédé destiné à fournir un accès à des informations d'exploitation relatives à une partie d'un signal de télévision numérique enregisté comprenant une première couche comportant un flux vidéo élémentaire et une seconde couche comportant un flux de transport, le flux vidéo élémentaire étant encapsulé dans le flux de transport, les informations d'exploitation étant extraites à partir d'une section de données privées d'un champ d'adaptation du flux de transport, les informations d'exploitation comprenant au moins l'un des éléments ci-après :
un emplacement et un type d'unité d'accès ;
des informations de temporisation ; et
des informations de décodage vidéo,
le procédé comprenant :
la réception d'un signal de télévision numérique, le signal numérique comprenant la section de données privées et au moins une autre section, la section de données privées comprenant les informations d'exploitation ;
l'utilisation des informations d'exploitation en vue de mettre en oeuvre un fonctionnement en mode truquage sur la première couche ; et
le placement des informations d'exploitation dans une zone d'extraction,
dans lequel :
ladite une autre section est chiffrée, et
la section de données n'est pas chiffrée, et
ladite une autre section comprend une copie des informations d'exploitation.

9. Procédé selon la revendication 8, dans lequel l'utilisation comprend l'étape de faire en sorte que les données vidéo indiquées par les informations d'exploitation extraites soient lues.

10. Procédé selon la revendication 8 ou la revendication 9 et dans lequel la zone d'extraction comprend un index.

11. Procédé selon la revendication 8 ou la revendication 9 et dans lequel l'extration se fait lors de la lecture du signal numérique.

12. Procédé selon la revendication 8 ou la revendication 9 et dans lequel l'extraction se fait lors de l'enregistrement du signal numérique.

13. Procédé selon la revendication 8 et dans lequel la section de données est optimisée pour une mise en oeuvre dans un matériel.

14. Appareil destiné à fournir un accès à des informations d'exploitation relatives à une partie d'un signal de télévision numérique enregistré comprenant une première couche comportant un flux vidéo élémentaire et une seconde couche comportant un flux de transport, le flux vidéo élémentaire étant encapsulé dans le flux de transport, les informations d'exploitation étant extraites d'une section de données privées d'un champ d'adaptation du flux de transport, les informations d'exploitation comprenant au moins l'un parmi les éléments ci-après :
un emplacement et un type d'unité d'accès ;
des informations de temporisation ; et
des informations de décodage vidéo,
l'appareil comprenant :
un module de réception d'un signal de télévision numérique exploitable de manière à recevoir le signal numérique, le signal numérique comprenant la section de données privées et au moins une autre section, la section de données privées comprenant les informations d'exploitation ;
un module d'utilisation d'informations d'exploitation exploitable de manière à mettre en oeuvre un fonctionnement en mode truquage sur la première couche ; et
un module de placement d'informations d'exploitation exploitable de manière à placer les informations d'exploitation dans une zone d'extraction,
dans lequel :
ladite une autre section est chiffrée, et
la section de données privées n'est pas chiffrée, et
ladite une autre section comprend une copie des informations d'exploitation.
